# EUROPEAN PATENT SPECIFICATION

(11) **EP 2 942 859 B1**
(45) Date of publication and mention of the grant of the patent: **01.04.2020**
(21) Application number: 15163289.0
(22) Date of filing: 10.03.2012
(51) Int. Cl.: H02K 1/27, H02K 5/18, H02K 1/30, H02K 7/18, F03D 9/00

(54) **ELECTRIC MACHINE**
ELEKTRISCHE MASCHINE
MACHINE ÉLECTRIQUE

(30) Priority: 10.03.2011 IT MI20110374
(43) Date of publication of application: 11.11.2015
(62) Divisional of application: 12724386.3
(73) Proprietor: WINDFIN B.V., 2451 VW Leimuiden (NL)
(72) Inventor: Casazza, Matteo, 39049 VAL DI VIZZE (IT); Pabst, Otto, 39037 RIO DI PUSTERIA (IT); Fasolo, Alessandro, 39049 VIPITENO (IT)
(74) Representative: Eccetto, Mauro

(56) References cited:
- EP-A1- 2 282 397
- EP-A2- 1 100 175
- WO-A1-2007/063370
- WO-A2-2006/017377
- WO-A2-2009/091248
- DE-A1-102009 025 929
- GB-A- 2 080 707
- US-A- 4 445 062
- US-A1- 2006 255 679

## Description

### TECHNICAL FIELD

The present invention relates to an electric machine.

More specifically, the present invention relates to an electric machine having a stator, and a rotor which rotates with respect to the stator about an axis of rotation.

### BACKGROUND ART

The stator comprises a stator cylinder, and stator segments arranged about the axis of rotation along the stator cylinder. And, similarly, the rotor comprises a rotor cylinder, and rotor segments arranged about the axis of rotation along the rotor cylinder. Each rotor segment comprises a support extending parallel to the axis of rotation; and magnetized modules arranged inside the support, parallel to the axis of rotation. The rotor segments are fitted to the rotor cylinder, and the stator segments to the stator cylinder. The rotor cylinder is fitted to the stator cylinder by means of at least one bearing.

Document EP 2282397 discloses a rotor comprising a magnetic guide and magnetic module supported by supports and spaced apart from rotor cylinder.

One drawback of the known art lies in part of the energy of the electric machine being dispersed in so-called electromagnetic losses, particularly in the rotor.

Electromagnetic losses are caused by electromagnetic fields interacting between the stator and rotor, thus resulting in power dissipation and a reduction in the efficiency of the electric machine.

One particular type of electromagnetic loss originating in the rotor is caused by the magnetic flux which closes on the rotor, is produced by the harmonics of the magnetomotive force of the stator, and induces parasitic currents in the rotor without producing any drive torque.

Another problem of the known art lies in power dissipation overheating the component parts of the rotor.

### OBJECT OF THE INVENTION

It is an object of the present invention to provide an electric machine designed to limit the drawbacks of the known art.

According to the present invention, there is provided an electric machine, comprising a stator, and a rotor which rotates about an axis of rotation with respect to the stator; the rotor comprising a plurality of magnetized modules, and a rotor cylinder which extends circumferentially, rotates about an axis of rotation, and is designed to support the plurality of magnetized modules; wherein the rotor comprises pairs of magnetic guides, each pair of magnetic guide being fitted to at least a respective magnetized module to guide the flux of the magnetized module; wherein the rotor comprises supports arranged about and extending radially with respect to the axis of rotation, and fitted to the rotor cylinder to support the magnetized modules and the pairs of magnetic guides; the pairs of magnetic guides being supported by the supports in such a way that the pairs of magnetic guides are spaced apart from the rotor cylinder; the electric machine being characterized in that the rotor cylinder is made of nonmagnetic material; wherein the nonmagnetic material is polymer material.

By virtue of the present invention, the magnetic flux produced by the harmonics of the magnetomotive force of the stator, and which closes through the nonmagnetic rotor cylinder, is greatly attenuated with respect to the known art, in which the rotor cylinder is made of ferromagnetic material. Consequently, the parasitic currents circulating in the rotor, and power dissipation are also reduced, thus reducing heating of the rotor.

An aluminium rotor cylinder is a good heat conductor and extremely lightweight; and an aluminium rotor can be extruded to form the rotor cylinder, cooling fins and supports simultaneously, provided the fins and supports are parallel to the rotor axis.

### BRIEF DESCRIPTION OF THE DRAWINGS

A number of non-limiting embodiments of the present invention will be described by way of example with reference to the accompanying drawings, in which :
Figure 1 shows a side view of a wind turbine;
Figure 2 shows a schematic front view, with parts removed for clarity, of an electric machine of the Figure 1 wind turbine;
Figure 3 shows a larger-scale side view, with parts removed for clarity, of the Figure 2 electric machine;
Figure 4 shows a larger-scale side view, with parts removed for clarity, of an alternative embodiment of the Figure 2 electric machine.

### PREFERRED EMBODIMENTS OF THE INVENTION

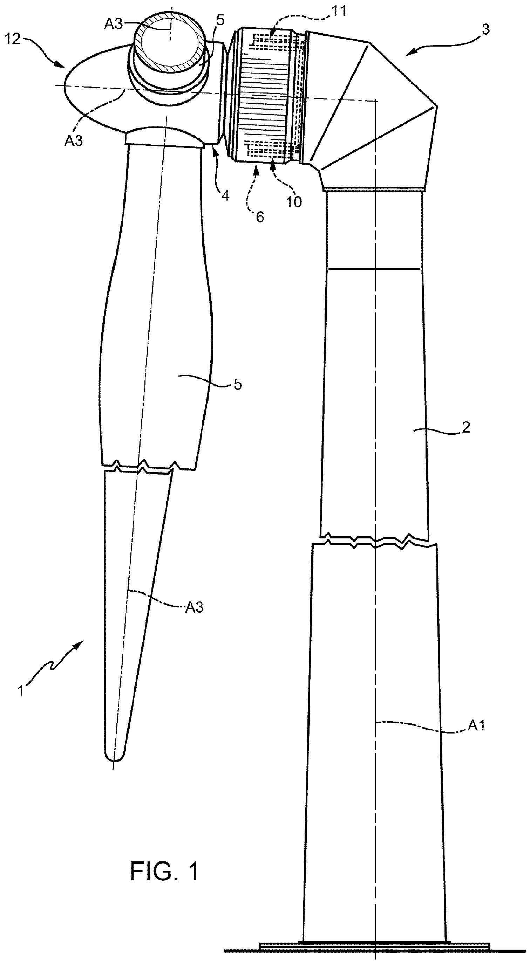

Number 1 in Figure 1 indicates as a whole a wind turbine for producing electric power.

In the Figure 1 example, wind turbine 1 is a direct-drive, variable-angular-speed type, and comprises a supporting structure 2, a nacelle 3, a hub 4, three blades 5 (only two shown in Figure 1), and an electric machine 6.

Blades 5 are fitted to hub 4, in turn fitted to nacelle 3, in turn fitted to supporting structure 2.

Supporting structure 2 is a structural member supporting nacelle 3.

In a variation (not shown) of the present invention, supporting structure 2 is a pylon, preferably made of ferrous material.

As shown in Figure 1, nacelle 3 is mounted to rotate about an axis A1 with respect to supporting structure 2, to position blades 5 into the wind; hub 4 is mounted to rotate about an axis of rotation A2 with respect to nacelle 3; and each blade 5 is fitted to hub 4 to rotate about an axis A3 with respect to hub 4. Electric machine 6 comprises a stator 10, and a rotor 11 which rotates with respect to stator 10 about axis of rotation A2. And hub 4, blades 5, and rotor 11 define a rotary assembly 12, which rotates with respect to nacelle 3 about axis of rotation A2.

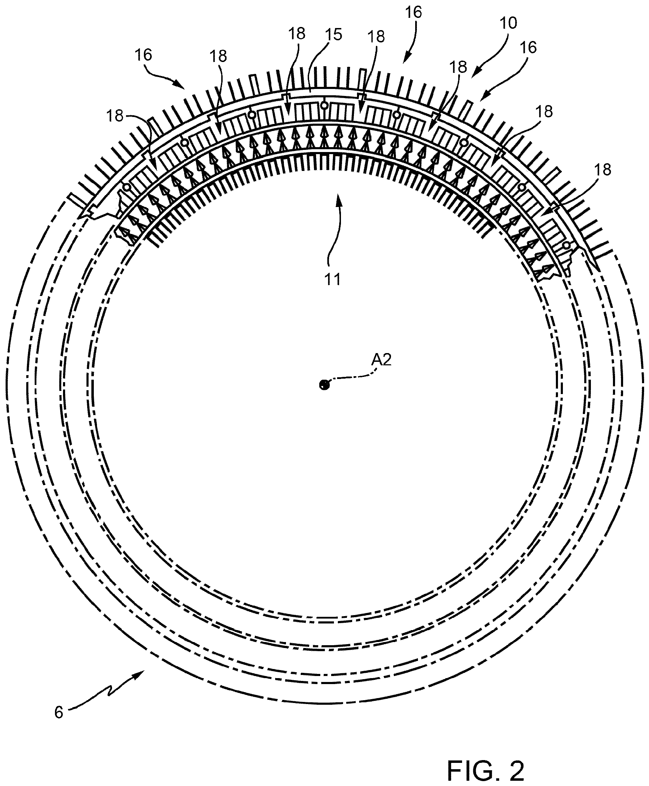

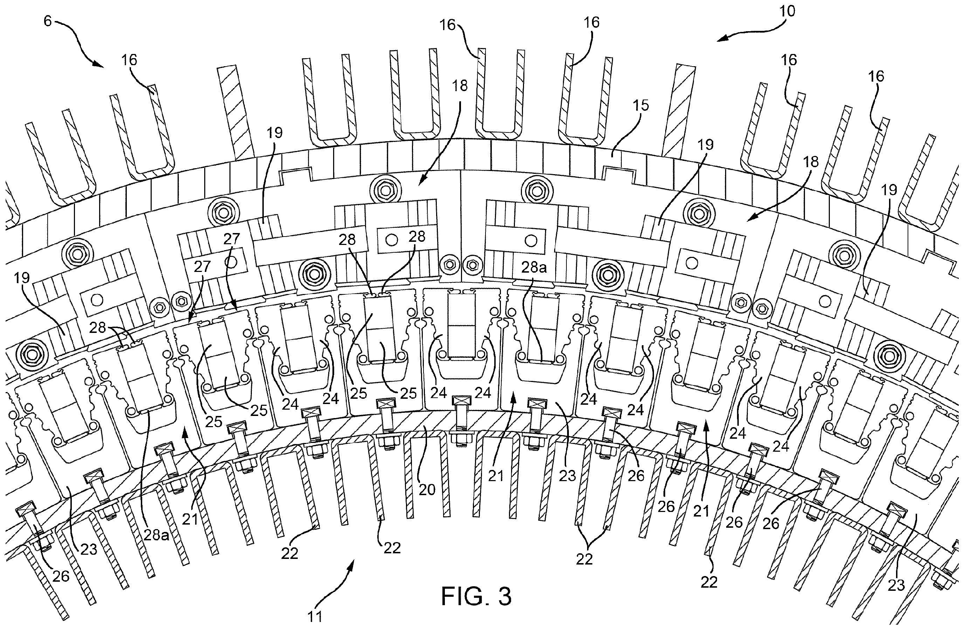

As shown in Figures 2 and 3, stator 10 comprises a stator cylinder 15; cooling fins 16 fixed to the outer face of stator cylinder 15; and a whole number of stator segments 18 arranged about axis of rotation A2 and fixed to the inner face of stator cylinder 15 by fastening devices not shown. Cooling fins 16 cool stator cylinder 15 and therefore the whole of stator 10. More specifically, cooling fins 16 and stator cylinder 15 are made of heat-conducting material, so the heat produced by Joule effect and otherwise inside stator 10 is transferred to stator cylinder 15 and from this to cooling fins 16 designed to dissipate it. Each stator segment 18 comprises windings, and packs of stator laminations 19 wound with a winding associated with only one stator segment 18, so that said stator segment 18 can be removed from stator 10 without interfering with the other stator segments 18. Stator cylinder 15 covers, protects, and supports stator segments 18. Rotor 11 comprises a rotor cylinder 20; rotor segments 21 arranged about axis of rotation A2; and cooling fins 22 fixed to the inner face of rotor cylinder 20. Rotor cylinder 20 is made of nonmagnetic material and, in one embodiment of the invention, is made of aluminium or aluminium alloy.

In a variation of the invention, rotor cylinder 20 is made of nonmagnetic material, in particular stainless steel.

In another variation of the invention, rotor cylinder 20 is made of nonmagnetic material, in particular copper.

In another variation of the invention, rotor cylinder 20 is made of nonmagnetic material, in particular polymer, and preferably heat-conducting polymer material.

Cooling fins 22 cool rotor cylinder 20 and therefore the whole of rotor 11. More specifically, cooling fins 22 and rotor cylinder 20 are made of heat-conducting nonmagnetic material, so the heat produced in rotor 11 is transferred to rotor cylinder 20 and from this to cooling fins 22 designed to dissipate it.

As shown in Figure 3, each rotor segment 21 comprises a gripper 23, magnetic guides 24, magnetized modules 25, and bolts 26.

Gripper 23 extends parallel to and radially with respect to axis of rotation A2, is fixed to rotor cylinder 20 of rotor 11 by bolts 26, is made of nonmagnetic material, and, in a preferred non-limiting embodiment of the invention, is made of aluminium or aluminium alloy.

In a variation of the invention, gripper 23 is made of nonmagnetic material, in particular stainless steel.

In another variation of the invention, gripper 23 is made of nonmagnetic material, in particular copper.

In another variation of the invention, gripper 23 is made of nonmagnetic, preferably heat-conducting polymer material.

In each rotor segment 21, magnetized modules 25 are aligned radially with respect to axis of rotation A2 (Figure 2) to form groups of modules 25, which in turn are arranged successively, parallel to axis of rotation A2 (Figure 2), along the whole of rotor segment 21.

With particular reference to Figures 2 and 3, each group of modules 25 comprises two modules 25 aligned radially with respect to axis of rotation A2; and, by way of a non-limiting example, each rotor segment 21 comprises eleven groups of modules 25 (not shown in the drawings) arranged successively, parallel to axis of rotation A2.

With reference to Figures 2 and 3, each group of modules 25 is located between a respective pair of magnetic guides 24, each defined by respective packs of laminations made of ferromagnetic material, to guide the magnetic flux of magnetized modules 25. Each rotor segment 21 therefore comprises eleven pairs of magnetic guides 24. Each pair of magnetic guides 24 is located inside gripper 23, which is fixed to rotor cylinder 20 by bolts 26 and defines a support for the respective pair of magnetic guides 24 and the respective group of modules 25. Each pair of magnetic guides 24 has two faces 27, is traversed in use by the magnetic flux of magnetized modules 25, and defines the field lines. Group of modules 25 is protected at the top end by two insulating members 28 between magnetic guides 24, and is protected at the bottom end by an insulating member 28a between magnetic guides 24.

In electric machine 6 described above, the magnetic flux defined by the main frequency component of the magnetomotive force of stator 10 assists in defining the torque of electric machine 6 and converting kinetic to electric energy and vice versa, whereas the magnetic flux defined by the harmonics of the magnetomotive force of stator 10 plays no part in defining the torque of electric machine 6 and merely dissipates energy in heat.

By virtue of rotor cylinder 20 of nonmagnetic material, the magnetic flux defined by the harmonics of the magnetomotive force of stator 10, and which closes in nonmagnetic rotor cylinder 20, is attenuated, i.e. is not attracted to rotor cylinder 20, as in the known art, and is reduced with respect to the known art, thus reducing parasitic currents in rotor 11 and power dissipation. Moreover, reducing power dissipation also reduces the heat generated in rotor 11 with respect to the known art.

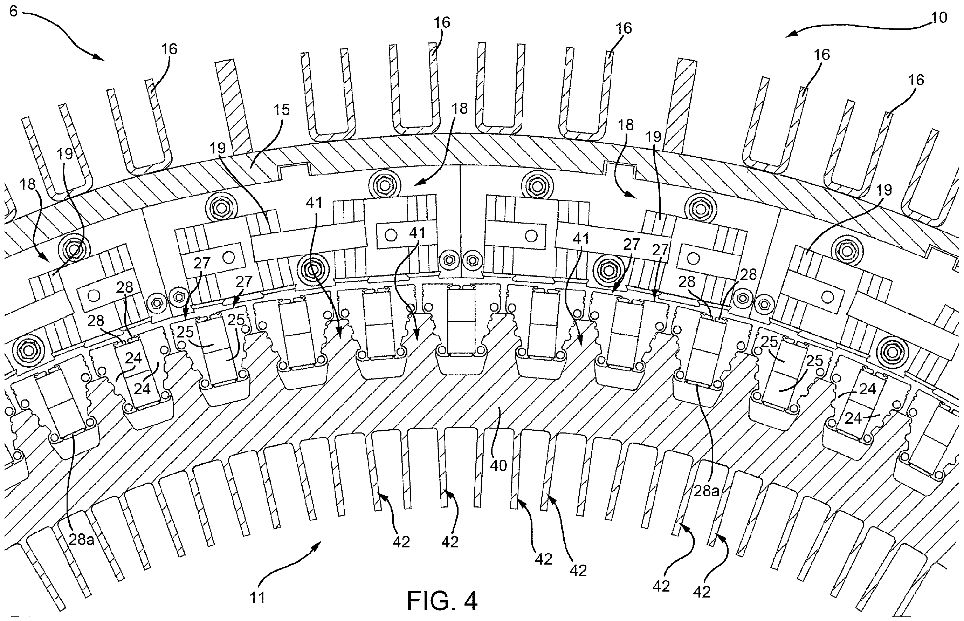

In the Figure 4 variation of the invention, rotor cylinder 20, fins 22 and grippers 23 are eliminated, and rotor 11 comprises a rotor cylinder 40, arms 41, and cooling fins 42, all made of nonmagnetic material and formed integrally in one piece.

Rotor cylinder 40 extends longitudinally, parallel to axis of rotation A2. Arms 41 extend radially, with respect to axis of rotation A2, towards stator 10, and are designed to engage magnetic guides 24, and more specifically to support magnetic guides 24 and magnetized modules 25. Arm 41 define supports for magnetized modules 25.

Cooling fins 42 extend radially, with respect to axis of rotation A2, in the opposite direction to arms 41 and towards the centre of rotor 11, and are designed to dissipate heat from rotor cylinder 40.

The nonmagnetic material from which rotor cylinder 40, arms 41 and cooling fins 42 are made is aluminium or aluminium alloy.

In a variation of the invention, the nonmagnetic material from which rotor cylinder 40, arms 41 and cooling fins 42 are made is a nonmagnetic, preferably heat-conducting polymer material.

By way of a non-limiting example, rotor 11 of aluminium, aluminium alloy or polymer material may be extruded to form rotor cylinder 40, cooling fins 42 and arms 41 simultaneously.

In a variation of the invention, the nonmagnetic material from which rotor cylinder 40, arms 41 and cooling fins 42 are made is stainless steel.

In another variation of the invention, the nonmagnetic material from which rotor cylinder 40, arms 41 and cooling fins 42 are made is copper-based.

Though electric machine 6 described is a radial-flux, buried permanent magnet type, the protective scope of the invention extends to any other type of permanent magnet electric machine, such as radial-flux surface-magnet, or axial-flux, or cross-flux electric machines. Also, the wind turbine is a direct-drive type, i.e. in which the hub and electric machine rotor are connected directly.

The present invention also covers embodiments not described in the present detailed description, as well as equivalent embodiments, within the protective scope of the accompanying Claims.

## Claims

1. An electric machine comprising a stator (10), and a rotor (11) which rotates about an axis of rotation (A2) with respect to the stator (10); the rotor (11) comprising a plurality of magnetized modules (25), and a rotor cylinder (20; 40) which extends circumferentially, rotates about an axis of rotation (A2), and is designed to support the plurality of magnetized modules (25); wherein the rotor (11) comprises pairs of magnetic guides (24), each pair of magnetic guide (24) being fitted to at least a respective magnetized module (25) to guide the flux of the magnetized module (25), wherein said magnetized module (25) is circumferentially located between said respective pair of magnetic guides (24); wherein the rotor (11) comprises supports (23; 41) arranged about and extending radially with respect to the axis of rotation (A2), and fitted to the rotor cylinder (20; 40) to support the magnetized modules (25) and the pairs of magnetic guides (24); the pairs of magnetic guides (24) being supported by the supports (23; 41) in such a way that the pairs of magnetic guides (24) are spaced apart from the rotor cylinder (20; 40); the electric machine being **characterized in that** the rotor cylinder (20; 40) is made of nonmagnetic material; wherein the nonmagnetic material is polymer material.

2. An electric machine as claimed in Claim 1, wherein the rotor (11) comprises cooling members (22; 42) arranged about and extending radially with respect to the axis of rotation (A2), and fitted to the rotor cylinder (20; 40) to cool the rotor (11); and the cooling members (22; 42) preferably extend from the opposite side to the supports (23; 41) of the rotor (11).

3. An electric machine as claimed in Claim 1 or 2, wherein the supports (23) comprise grippers (23) connected to the rotor cylinder (20) to support the plurality of magnetized modules (25).

4. An electric machine as claimed in Claim 2, wherein the cooling members (22) comprise cooling fins (22) connected to the rotor cylinder (20), on the opposite side to the supports (23), to cool the rotor (11).

5. An electric machine as claimed in Claims 1 and 2, wherein the supports (41) comprise arms (41) extending radially with respect to the axis of rotation (A2) to support the magnetized modules (25).

6. An electric machine as claimed in Claim 5, wherein the cooling members (42) comprise cooling fins (42) extending radially with respect to the axis of rotation (A2) to cool the rotor (11); the cooling fins (42) preferably extending on the opposite side to the arms (41) .

7. An electric machine as claimed in Claim 5 or 6, wherein the arms (41) are made of nonmagnetic material and integrally with the rotor cylinder (40).

8. An electric machine as claimed in Claim 6, wherein the cooling fins (42) are made of nonmagnetic material and integrally with the rotor cylinder (40).

## Patentansprüche

1. Eine elektrische Maschine umfassend einen Stator (10) und einen Rotor (11), welcher sich um eine Rotationsachse (A2) bezüglich des Stators (10) dreht; wobei der Rotor (11) Folgendes umfasst: eine Vielzahl von magnetisierten Modulen (25) und einen Rotorzylinder (20; 40), der sich umlaufend erstreckt, sich um eine Rotationsachse (A2) dreht und so gestaltet ist, dass er die Vielzahl von magnetisierten Modulen (25) trägt; wobei der Rotor (11) Paare von Magnetführern (24) aufweist, wobei jedes Paar von Magnetführern (24) an mindestens einem entsprechenden magnetisierten Modul (25) angepasst ist, um den Fluss des magnetisierten Moduls (25) zu führen, wobei das genannte magnetisierte Modul (25) in Umfangsrichtung zwischen dem genannten entsprechenden Paar von Magnetführern (24) angeordnet ist; wobei der Rotor (11) Unterstützungen (23; 41) aufweist, die um die Rotationsachse (A2) herum angeordnet sind und sich radial zu dieser erstrecken und am Rotorzylinder (20; 40) angepasst sind, um die magnetisierten Module (25) und die Paare von Magnetführern (24) zu unterstützen; wobei die Paare von Magnetführern (24) durch die Unterstützungen (23; 41) in einer solchen Weise unterstützt werden, dass die Paare von Magnetführern (24) von dem Rotorzylinder (20; 40) räumlich getrennt sind; wobei die elektrische Maschine **dadurch gekennzeichnet ist, dass** der Rotorzylinder (20; 40) aus nichtmagnetischem Material gemacht ist; wobei das nichtmagnetische Material ein Polymermaterial ist.

2. Eine elektrische Maschine wie in Anspruch 1 beansprucht, wobei der Rotor (11) Kühlteile (22; 42) aufweist, welche um und sich radial bezüglich der Rotationsachse (A2) erstreckend angeordnet sind und an den Rotorzylinder (20; 40) angepasst sind, um den Rotor (11) zu kühlen; und die Kühlteile (22; 42) erstrecken sich vorzugsweise von der entgegengesetzten Seite zu den Unterstützungen (23; 41) des Rotors (11).

3. Eine elektrische Maschine wie in Anspruch 1 oder 2 beansprucht, wobei die Unterstützungen (23) Greifer (23) umfassen, welche am Rotorzylinder (20) verbunden sind, um die Vielzahl von magnetisierten Modulen (25) zu unterstützen.

4. Eine elektrische Maschine wie in Anspruch 2 beansprucht, wobei die Kühlteile (22) Kühlfinnen bzw. Kühlrippen (22) umfassen, welche mit dem Rotorzylinder (20) an der entgegengesetzten Seite der Unterstützungen (23) verbunden sind, um den Rotor (11) zu kühlen.

5. Eine elektrische Maschine wie in Anspruch 1 und 2 beansprucht, wobei die Unterstützungen (41) Arme (41) umfassen, welche sich radial bezüglich der Rotationsachse (A2) erstrecken, um die magnetisierten Module (25) zu unterstützen.

6. Eine elektrische Maschine wie in Anspruch 5 beansprucht, wobei die Kühlteile (42) Kühlfinnen bzw. Kühlrippen (42) umfassen, welche sich radial bezüglich der Rotationsachse (A2) erstrecken, um den Rotor (11) zu kühlen; die Kühlfinnen bzw. Kühlrippen (42) erstrecken sich vorzugsweise an der zu den Armen (41) entgegengesetzten Seite.

7. Eine elektrische Maschine wie in Anspruch 5 oder 6 beansprucht, wobei die Arme (41) aus nichtmagnetischem Material gemacht und integral mit dem Rotorzylinder (40) sind.

8. Eine elektrische Maschine wie in Anspruch 6 beansprucht, wobei die Kühlfinnen bzw. Kühlrippen (42) aus nichtmagnetischem Material und integral mit dem Rotorzylinder (40) sind.

## Revendications

1. Machine électrique comprenant un stator (10) et un rotor (11) qui tourne autour d'un axe de rotation (A2) par rapport au stator (10) ; le rotor (11) comprenant une pluralité de modules aimantés (25) et un cylindre de rotor (20; 40) qui s'étend circonférentiellement, tourne autour d'un axe de rotation (A2) et est destiné à supporter la pluralité de modules aimantés (25) ; dans laquelle le rotor (11) comprend des paires de guides magnétiques (24), chaque paire de guide magnétique (24) étant adaptée à au moins un module aimanté respectif (25) pour guider le flux du module aimanté (25), dans laquelle ledit module aimanté (25) est situé circonférentiellement entre ladite paire de guides magnétiques (24) respectifs ; dans laquelle le rotor (11) comprend des supports (23; 41) disposés autour et s'étendant radialement par rapport à l'axe de rotation (A2), et montés sur le cylindre de rotor (20; 40) pour supporter les modules aimantés (25) et les paires de guides magnétiques (24); les paires de guides magnétiques (24) étant supportées par les supports (23; 41) de telle sorte que les paires de guides magnétiques (24) soient espacées du cylindre de rotor (20; 40); la machine électrique étant **caractérisé en ce que** le cylindre de rotor (20; 40) est fait d'un matériau non magnétique; dans lequel le matériau non magnétique est un matériau polymère.

2. Machine électrique selon la revendication 1, dans laquelle le rotor (11) comprend des éléments de refroidissement (22; 42) disposés autour et s'étendant radialement par rapport à l'axe de rotation (A2), et montés sur le cylindre de rotor (20; 40) pour refroidir le rotor (11); et les éléments de refroidissement (22; 42) s'étendent de préférence du côté opposé aux supports (23; 41) du rotor (11).

3. Machine électrique selon la revendication 1 ou 2, dans laquelle les supports (23) comprennent des pinces (23) reliées au cylindre de rotor (20) pour supporter la pluralité de modules aimantés (25).

4. Machine électrique selon la revendication 2, dans laquelle les éléments de refroidissement (22) comprennent des ailettes de refroidissement (22) reliées au cylindre de rotor (20), du côté opposé aux supports (23), pour refroidir le rotor (11).

5. Machine électrique selon les revendications 1 et 2, dans laquelle les supports (41) comprennent des bras (41) s'étendant radialement par rapport à l'axe de rotation (A2) pour supporter les modules aimantés (25).

6. Machine électrique selon la revendication 5, dans laquelle les éléments de refroidissement (42) comprennent des ailettes de refroidissement (42) s'étendant radialement par rapport à l'axe de rotation (A2) pour refroidir le rotor (11) ; les ailettes de refroidissement (42) s'étendant de préférence du côté opposé aux bras (41).

7. Machine électrique selon la revendication 5 ou 6, dans laquelle les bras (41) sont en matériau non magnétique et solidaires du cylindre de rotor (40).

8. Machine électrique selon la revendication 6, dans laquelle les ailettes de refroidissement (42) sont en matériau non magnétique et solidaires du cylindre de rotor (40).
